# EUROPEAN PATENT APPLICATION

(11) **EP 4 553 379 A1**
(43) Date of publication of application: **14.05.2025**
(21) Application number: 23834874.2
(22) Date of filing: 05.07.2023
(51) Int. Cl.: F21V 14/00, F21V 1/10

(54) **BLOCKING DEVICE AND VEHICLE LAMP**

(30) Priority: 05.07.2022 CN 202210793956
(71) Applicant: Mind Electronics Appliance Company Limited, Baoding, Hebei 071000 (CN)
(72) Inventor: YI, Ke, Baoding, Hebei 071000 (CN); CHENG, Bo, Baoding, Hebei 071000 (CN); OUYANG, Yigang, Baoding, Hebei 071000 (CN); ZHANG, Xi, Baoding, Hebei 071000 (CN); HONG, Yurong, Baoding, Hebei 071000 (CN); WAN, Ting, Baoding, Hebei 071000 (CN); PANG, Xin, Baoding, Hebei 071000 (CN); ZHAO, Xiaomai, Baoding, Hebei 071000 (CN); LI, Zhuangzhuang, Baoding, Hebei 071000 (CN); WANG, Zhenren, Baoding, Hebei 071000 (CN)
(74) Representative: van Breda, Jacobus
(86) International application number: PCT/CN2023/105804
(87) International publication number: WO 2024/008107

(57) **Abstract**

A blocking device and a vehicle lamp, which relate to the technical field of vehicle manufacturing. A light-emitting component (800) has a light path direction, and the blocking device is arranged in front of the light-emitting component (800) in the light path direction. The blocking device comprises a transmission portion (200) and a plurality of blocking components, wherein the transmission portion (200) comprises transmission teeth, each of the plurality of blocking components is provided with meshing teeth, and the transmission teeth mesh with the meshing teeth to switch each blocking component between a first state and a second state; when the blocking component is in the first state, the plurality of blocking components fit together to form a blocking body, and as viewed in the light path direction, at least part of the light-emitting component (800) is blocked by the blocking body; and when the blocking component is in the second state, the transmission portion (200) drives the plurality of blocking components to separate from each other, and as viewed in the light path direction, the light-emitting component (800) is exposed. In the blocking device and the vehicle lamp, the accuracy of transmission between the plurality of blocking components and the transmission portion (200) is improved, and the plurality of blocking components have controllable moving distances, thereby effectively preventing incomplete blocking and incomplete exposure.

## Description

The present application claims the priority to Chinese Patent Application No. 202210793956.6, titled "BLOCKING DEVICE AND VEHICLE LAMP", filed with the China National Intellectual Property Administration on July 5th, 2022, the entire content of which is incorporated herein by reference.

### FIELD

The present application relates to the technical field of vehicle manufacturing, and in particular to a blocking device and a vehicle lamp.

### BACKGROUND

A light-emitting assembly of a vehicle lamp is usually protected only by a lamp shade covering the light-emitting assembly, and the light-emitting assembly is easily damaged (for example, the light-emitting assembly may be damaged when the vehicle lamp collides with a splashing object during driving) .

At present, a blocking device is usually provided in front of the light-emitting assembly to block and protect the light-emitting assembly when the light-emitting assembly is not in operation. When the light-emitting assembly is in operation, the part of the blocking device for blocking the light-emitting assembly needs to be hidden by a transmission part, to expose light-emitting assembly. However, it is difficult to control the accuracy of the movement stroke of the part of the existing blocking device in the hiding process (or the appearing process), often resulting in incomplete hiding (or incomplete appearance) of the part of the blocking device. For example, when the light-emitting assembly is in operation, the part of the blocking device still remains unhidden. For another example, when the light-emitting assembly is not in operation, the part of the blocking device appears incompletely, resulting in that a part of the light-emitting assembly is still not blocked by the blocking device.

### SUMMARY

An object of the present application is to provide a blocking device and a vehicle lamp, to solve the technical problem in the prior art that it is difficult to control the accuracy of the movement stroke of the part of the existing blocking device in a blocking process (or an appearing process), often resulting in incomplete hiding (or incomplete appearance) of the part of the blocking device.

According to a first aspect of the present application, a blocking device is provided for blocking a light-emitting assembly having a light path direction. The blocking device is arranged in front of the light-emitting assembly in the light path direction. The blocking device includes a transmission part and multiple blocking assemblies, the transmission part includes transmission teeth, and each of the multiple blocking assemblies includes meshing teeth, and the transmission teeth are meshed with the meshing teeth to drive the corresponding blocking assembly to switch between a first state and a second state; where
in the first state of the multiple blocking assemblies, the multiple blocking assemblies are fitted together to form a blocking body, to make at least part of the light-emitting assembly be blocked by the blocking body as viewed in the light path direction; and
in the second state of the multiple blocking assemblies, the transmission part is configured to drive the multiple blocking assemblies to be separated from each other, to make the light-emitting assembly be exposed as viewed in the light path direction.

Preferably, the transmission teeth are embodied as an inner toothed ring. Each of the multiple blocking assemblies includes a rotary shaft, and the meshing teeth of the blocking assembly are embodied as a rotary gear, the rotary gear and the rotary shaft are coaxially arranged; the rotary gear is meshed with the inner toothed ring to drive the blocking assembly to rotate with the rotary shaft, to make the blocking assembly be switched between the first state and the second state.

Preferably, each of the multiple blocking assemblies includes a blocking sheet, and the rotary shaft is provided on one side of the blocking sheet proximate to the inner toothed ring; and
the blocking body is in a circular shape as viewed in the light path direction, and the blocking sheets of the multiple blocking assemblies are uniformly distributed in a circumferential direction of the circular shape.

Preferably, the transmission part further includes driving teeth, the blocking device further includes a driving assembly, and the driving assembly is meshed with the driving teeth; and
the transmission part is an annular washer, the inner toothed ring is provided on an inner ring of the annular washer, and the driving teeth are provided on at least part of an outer ring of the annular washer.

Preferably, each of the multiple blocking assemblies includes a guide post, and the guide post is provided on the other side of the blocking sheet; and
the blocking device further includes a guide part having a guide groove, the guide post is arranged in the guide groove; and the guide post is configured to slide along the guide groove when the blocking assembly is being switched between the first state and the second state.

Preferably, the blocking device further includes a first receiving part having a channel portion and an annulus portion being connected to each other. The channel portion includes a cylindrical channel, the light-emitting assembly is arranged at one end of the cylindrical channel, and the cylindrical channel has an axis coinciding with an axis of the blocking body. The annulus portion is arranged between the transmission part and the multiple blocking assemblies, and the rotary shaft runs through the annulus portion.

Preferably, the blocking device further includes a second receiving part being in an annular shape, and the second receiving part is sleeved outside the channel portion. The second receiving part is arranged on one side of the transmission part away from the multiple blocking assemblies, one end of the rotary shaft is connected to the second receiving part, and the other end of the rotary shaft is connected to the blocking sheet.

Preferably, the blocking device further includes projecting parts, and each of the blocking assemblies includes a corresponding one of the projecting parts, and the projecting part is provided on one edge of the blocking sheet away from a center of the circular shape;
the blocking sheet is a light guide sheet, and the light guide sheet is configured to emit light when being irradiated by light emitted from the projecting part or the light-emitting assembly; or,
the blocking sheet is a first light-transmitting sheet, and one side of the first light-transmitting sheet is provided with a colored coating film, where a thickness of a portion of the colored coating film located at a predetermined position of the first light-transmitting sheet is different from a thickness of the remaining portion the colored coating film located at other positions of the first light-transmitting sheet, to make the predetermined position of the first light-transmitting sheet have a light transmittance different from that of the other positions, to enable the first light-transmitting sheet to present a predetermined pattern; or,
the blocking sheet is a second light-transmitting sheet, and a portion of the second light-transmitting sheet is provided with an opaque coating layer.

A vehicle lamp is provided according to a second aspect of the present application, the vehicle lamp includes the blocking device according to any one of the above technical solutions, and thus the vehicle lamp has all the beneficial effects of the blocking device, which will not be described in detail here.

Preferably, the vehicle lamp further includes the light-emitting assembly, and the vehicle lamp can be switched among a resting state, a side-projecting state and a front-projecting state when the blocking assemblies are in the first state;
both the light-emitting assembly and the projecting parts are configured not to emit light in the resting state of the vehicle lamp;
the projecting parts are configured to emit light while the light-emitting assembly is configured not to emit light in the side-projecting state of the vehicle lamp; and
the light-emitting assembly is configured to emit light while the projecting parts are configured not to emit light in the front-projecting state of the vehicle lamp.

Compared with the prior art, the present application has the following beneficial effects.

In the blocking device according to the present application, the transmission teeth are in meshing cooperation with the meshing teeth, thus the accuracy of transmission between the multiple blocking assemblies and the transmission part is improved when the transmission part drives the multiple blocking assemblies to switch between the first state and the second state, so that movement strokes of the multiple blocking assemblies are controllable, thereby effectively preventing incomplete blocking and incomplete exposure.

In order to make the above objects, features and advantages of the present application more obvious and easy to understand, preferred embodiments are described in detail in conjunction with accompanying drawings below.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic exploded view showing the structure of a blocking device according to an embodiment of the present application;
FIG. 2 is a schematic perspective view showing the structure of the blocking device according to the embodiment of the present application;
FIG. 3 is another schematic perspective view showing the structure of the blocking device according to the embodiment of the present application;
FIG. 4 is another schematic exploded view showing the structure of the blocking device according to the embodiment of the present application; and
FIG. 5 is a schematic perspective view showing the structure of a blocking assembly according to an embodiment of the present application.

### Reference numerals:

| | | | |
|---|---|---|---|
| 110 | blocking sheet, | 111 | first arc, |
| 112 | second arc, | 113 | third arc, |
| 114 | extension edge, | 115 | first sharp corner, |
| 116 | second sharp corner, | 117 | third sharp corner, |
| 120 | rotary shaft, | 130 | rotary gear, |
| 140 | guide post, | 151 | connection portion, |
| 152 | projecting portion, | 200 | transmission part, |
| 210 | inner toothed ring, | 220 | driving teeth, |
| 300 | driving assembly, | 400 | guide part, |
| 410 | guide groove, | 500 | first receiving part, |
| 600 | second receiving part, | 700 | wire part, |
| 800 | light-emitting assembly. | | |

### DETAILED DESCRIPTION OF THE EMBODIMENTS

The technical solutions according to the embodiments of the present application are described clearly and comprehensively below in conjunction with the accompanying drawings. It is apparent that the described embodiments are only some of the embodiments according to the present application, rather than all of the embodiments.

In general, assemblies in the embodiments of the present application, which are described and illustrated herein in the accompanying drawings, may be arranged and designed in a variety of different configurations. Accordingly, the following detailed description of the embodiments of the present application as provided in the accompanying drawings is not intended for limiting the scope as claimed by the present application, but for showing the embodiments selected for the present application.

Based on the embodiments of the present application, all other embodiments obtained by those skilled in the art without any creative work will fall into the protection scope of the present application.

In the description of the present application, it should be noted that the orientations or positional relationships indicated by the terms such as "central", "upper", "lower", "left", "right", "vertical", "horizontal", "inner", and "outer", are based on the orientations or positional relationships shown in the accompanying drawings, which are only used to facilitate the description of the present application and to simplify the description, and are not intended to indicate or imply that the devices or elements referred to must have a particular orientation or can only be configured and operated in a particular orientation. Therefore the above-mentioned terms should not be construed as a limitation to the present application. In addition, terms such as "first", "second", "third" and the like are merely for description, and should not be construed as indicating or implying relative importance.

In the description of the present application, it should be noted that, unless otherwise clearly specified and limited, the terms "mount", "connected to" and "connection" should be understood in a broad sense. For example, it may refer to a fixed connection, a detachable connection, or an integral connection; it may refer to a mechanical connection, or an electrical connection; it may refer to a direct connection, or an indirect connection through an intermediate medium, or internal communication between two elements. For those skilled in the art, the specific meanings of the above terms in the present application may be understood according to specific situations.

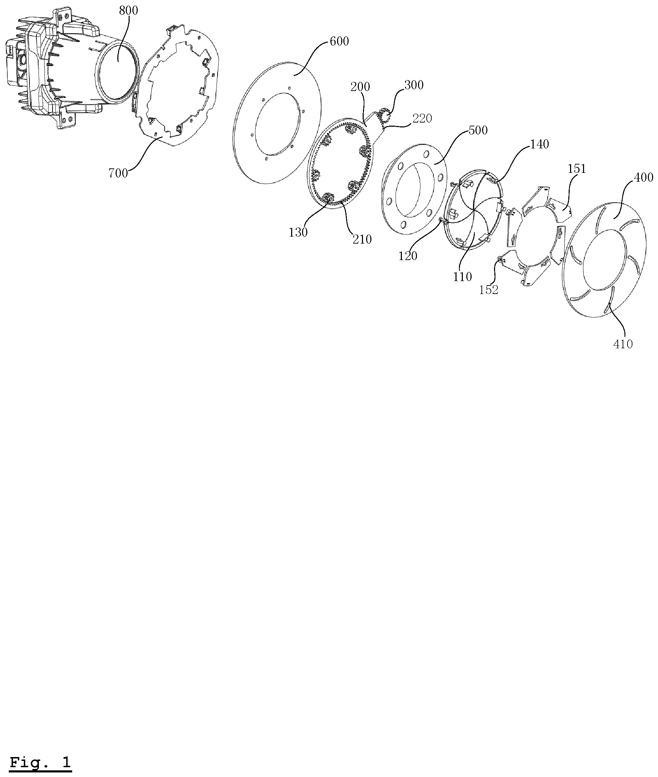

A blocking device and a vehicle lamp according to some embodiments of the present application will be described below with reference to FIG. 1 to FIG. 4.

As shown in FIG. 1 to FIG. 4, a blocking device for blocking a light-emitting assembly 800 having a light path direction is provided according to an embodiment of the present application, and the light-emitting assembly 800 is arranged in front of the light-emitting assembly 800 in the light path direction. The blocking device includes a transmission part 200 and multiple blocking assemblies, where the transmission part 200 includes transmission teeth, each of the multiple blocking assemblies includes meshing teeth, and the transmission teeth are meshed with the meshing teeth to drive the corresponding blocking assembly to switch between a first state and a second state. When the blocking assemblies are in the first state, the multiple blocking assemblies are fitted together to form a blocking body, to make at least part of the light-emitting assembly 800 be blocked by the blocking body as viewed in the light path direction. When the blocking assemblies are in the second state, the transmission part 200 is configured to drive the multiple blocking assemblies to be separated from each other, to make the light-emitting assembly 800 be exposed as viewed in the light path direction. Thus, through the meshing cooperation between the transmission teeth and the meshing teeth, the accuracy of transmission between the multiple blocking assemblies and the transmission part 200 is improved when the transmission part 200 drives the blocking assemblies to switch between the first state and the second state, so that movement strokes of the multiple blocking assemblies are controllable, thereby effectively preventing incomplete blocking and incomplete exposure by the blocking device.

As shown in FIG. 1, FIG. 3 and FIG. 4, the transmission teeth may be an inner toothed ring 210. For each of the multiple blocking assemblies, the blocking assembly includes a rotary shaft 120, and the meshing teeth are embodied as a rotary gear 130 coaxially arranged with the rotary shaft 120. The rotary gear 130 is meshed with the inner toothed ring 210 to drive the blocking assembly to rotate with the rotary shaft 120, such that the blocking assembly is switched between the first state and the second state. In this way, when the inner toothed ring 210 is driven to rotate, the rotary gears 130 of the multiple blocking assemblies are driven by the inner toothed ring 210 at the same time, so that the multiple blocking assemblies rotate with their respective rotary shafts 120, to make the blocking assemblies be switched between the first state and the second state.

Preferably, the transmission part 200 may further include driving teeth 220, the blocking device may further include a driving assembly 300, and the driving assembly 300 is meshed with the driving teeth 220 to drive the transmission part 200 to move.

Preferably, as shown in FIG. 1, FIG. 3 and FIG. 4, the transmission part 200 may be an annular washer. The inner toothed ring 210 may be provided on an inner ring of the annular washer, and the driving teeth 220 are provided on at least part of an outer ring of the annular washer. In this way, the driving assembly 300 can mesh with the driving teeth 220 to drive the annular washer to rotate around its own axis, to further drive the rotary gear 130 to rotate.

Optionally, the driving assembly 300 may include a rotary motor and a driving gear coaxially arranged with each other, and the driving gear meshes with the driving teeth 220 to realize transmission.

However, it should be noted that the driving assembly is not limited to the form of the above rotary motor and the driving gear. Although not shown in the drawings, the driving assembly may be in other forms as long as it can mesh with the driving teeth to provide power for the inner toothed ring. For example, the driving assembly may include a worm and a linear driving portion, where the worm is meshed with the driving teeth, and the linear driving portion is connected to one end of the worm. The linear driving portion may be a pneumatic cylinder, a linear motor or the like. As another example, the driving assembly may further include the linear driving portion, an annular gear and a lead screw, where the linear drive portion is connected to one end of the lead screw, an inner ring of the annular gear is formed with internal threads engaged with the lead screw, the annular gear is meshed with the above driving teeth, and the annular gear is sleeved outside the lead screw.

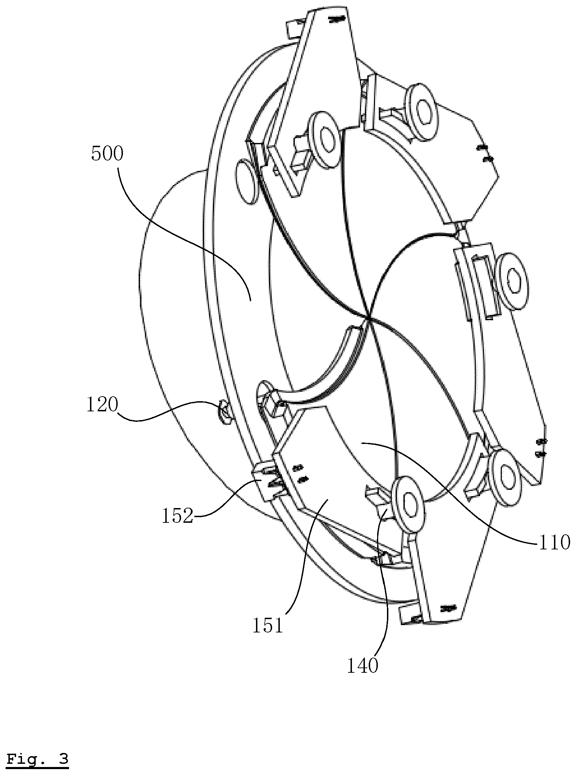

In the embodiment, as shown in FIG. 1 and FIG. 3, each blocking assembly includes a blocking sheet 110, and the rotary shaft 120 is provided on one side of the blocking sheet 110 proximate to the inner toothed ring 210. When viewed in the light path direction, the blocking body is in a circular shape, and the blocking sheets 110 of the multiple blocking assemblies are uniformly distributed in a circumferential direction of the circular shape. Thus, when the blocking assemblies are switched from the first state to the second state, the light-emitting assembly 800 can be gradually exposed from a center of the blocking body, so that a hidden process of the blocking assemblies forms a dynamic effect of the light-emitting assembly 800 gradually blooming from the center. Similarly, when the blocking assemblies are switched from the second state to the first state, the light-emitting assembly 800 can be gradually blocked from an edge of the blocking body, so that an appearance process of the blocking assembly forms a dynamic effect of the light-emitting assembly 800 gradually closing and converging from the edge, thus the exposure/hidden process of the light-emitting assembly 800 has a more cool and technological sense, which effectively improves the advanced sense of the vehicle lamp, thereby improving the user experience.

Referring to FIG. 3, in order to clearly show the structure of the blocking sheet 110, one of the blocking assemblies is concealed in the drawing. Preferably, when the blocking assembly is in the first state, in a radial direction of the blocking body, a width of the blocking sheet 110 gradually decreases from the edge of the blocking body to the center of the blocking body, such that the multiple blocking sheets 110 can be fitted together to form the circular blocking body.

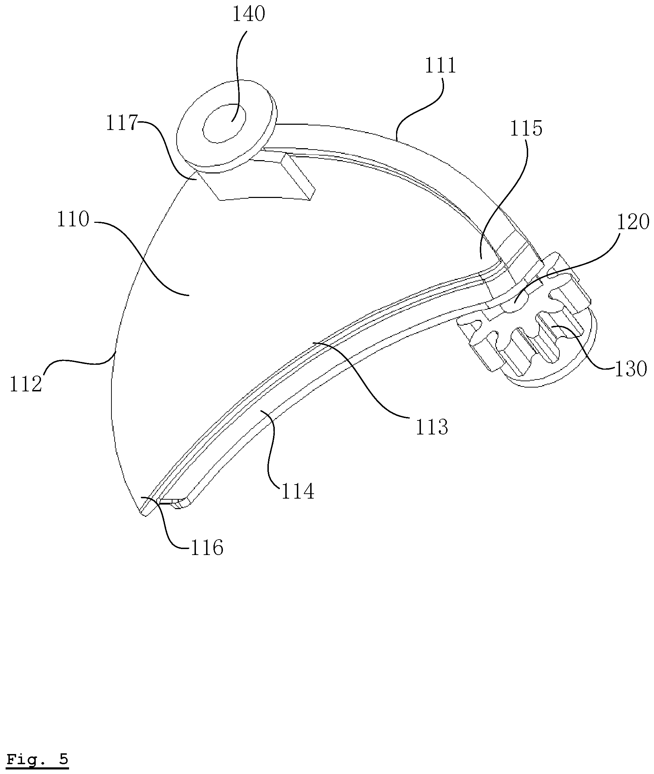

Preferably, when being viewed along the light path direction, the blocking sheet 110 is of a shape formed by three segments of arcs connected end to end. Referring to FIG. 5, the arc formed by an edge of the blocking sheet 110 extending in the circumferential direction of the blocking body is defined as a first arc 111, and the other two arcs are defined as a second arc 112 and a third arc 113, respectively. In addition, a sharp corner defined by the first arc 111 and the third arc 113 is referred to as a first sharp corner 115, a sharp corner defined by the second arc 112 and the third arc 113 is referred to as a second sharp corner 116, and a sharp corner defined by the first arc 111 and the second arc 112 is referred to as a third sharp corner 117.

Preferably, as shown in FIG. 5, the above rotary shaft 120 is arranged at the first sharp corner 115. The second arc 112 is formed by making an arc with the rotary shaft 120 as an axis and a distance from an end of the second sharp corner 116 to the rotary shaft 120 as a radius. Correspondingly, the third arc 113 is configured to be fitted to the second arc 112 of another blocking sheet 110 which is adjacent to the above blocking sheet 110 and located at a side of the above blocking sheet 110 where the third arc 113 is, so as to effectively prevent the blocking sheet 110 from interfering with adjacent blocking sheets 110 during rotation.

Optionally, as shown in FIG. 5, the blocking sheet 110 further includes an extension edge 114, which is provided at the edge of the blocking sheet 110 where the third arc 113 is located. When the blocking assembly is in the first state, the extension edge 114 can effectively fill a gap between two adjacent blocking sheets 110, to prevent incomplete blocking for the light-emitting assembly 800 when the blocking assemblies are in the first state.

Preferably, as shown in FIG. 3 to FIG. 5, each of the blocking assemblies includes v a guide post 140, and the guide post 140 is provided on another side of the blocking sheet 110.

Correspondingly, as shown in FIG. 1, FIG. 2 and FIG. 4, the blocking device further includes a guide part 400, the guide part includes guide grooves 410, and the guide post 140 is arranged in the corresponding guide groove 410. The guide post 140 slides along the guide groove 410 when the blocking assembly is being switched between the first state and the second state. In this way, the accuracy of the movement stroke of the blocking assembly is further improved, to reduce the probability of incomplete blocking and incomplete exposure by the blocking device.

Optionally, as shown in FIG. 5, the guide post 140 may be provided at the third sharp corner 117 to improve the accuracy of the movement stroke of the blocking assembly.

With reference to FIG. 1 to FIG. 5, the example that the blocking device includes six blocking assemblies is shown, but the number is not limited to this. The number of the blocking assemblies may be three, four, five, seven, eight, nine, ten, eleven, twelve, thirteen, fourteen, fifteen, sixteen, seventeen, eighteen, nineteen, twenty or more, as long as the blocking device can realize the appearing and hiding action.

Based on the features of the blocking assembly described above, the blocking sheet 110 may be of the following three examples of form.

In a first example, the blocking sheet 110 is a light guide sheet, and the vehicle lamp described below further includes a projecting part. The projecting part emits light to irradiate the light guide sheet, to make the light guide sheet emits light.

In a second example, the blocking sheet 110 is a first light-transmitting sheet, and one side of the first light-transmitting sheet is provided with a colored coating film, where a thickness of a portion of the colored coating film located at a predetermined position of the first light-transmitting sheet is different from a thickness of the remaining portion the colored coating film located at other positions of the first light-transmitting sheet, to make the predetermined position of the first light-transmitting sheet have a light transmittance different from that of the other positions, to enable the first light-transmitting sheet to present a predetermined pattern.

Optionally, the thickness of the portion of the colored coating film located at the predetermined position may be reduced by laser engraving to achieve the predetermined pattern.

In a third example, the blocking sheet 110 is a second light-transmitting sheet, and a portion of the second light-transmitting sheet is provided with an opaque coating layer.

Optionally, a side of the second light-transmitting sheet is entirely provided with the opaque coating layer, and the thickness of the opaque coating layer at a predetermined position can be reduced by laser engraving to make the predetermined position light-transmitting, so as to achieve a predetermined pattern.

Preferably, each blocking assembly further includes a projecting part, and the projecting part is provided on one edge of the blocking sheet 110 away from a center of the circular shape, to enhance the cool and technological senses during exposure/hidden process of the light-emitting assembly 800, which effectively increases the advanced sense of the vehicle lamp.

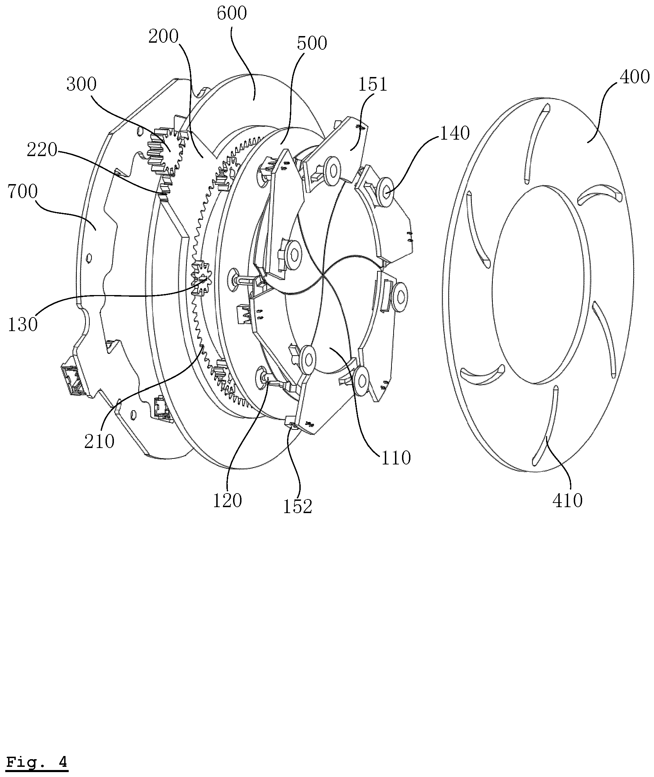

Specifically, as shown in FIG. 3 and FIG. 4, the projecting part includes a connection portion 151 and a projecting portion 152, and the guide post 140 is configured to run through the connection portion 151 to realize the fixation between the connection portion 151 and the blocking sheet 110. The connecting portion 151 extends from the guide post 140 to an outer side of the first arc 111 of the blocking sheet 110. The projecting portion 152 is provided on a portion of the connection portion 151 located at the outer side of the first arc 111, and the projecting portion 152 is located on the side of the connection portion 151 facing the blocking sheet 110, so that the projecting portion 152 faces the side portion of the blocking sheet 110, to realize a side-projecting state of the vehicle lamp described below.

Preferably, the above projecting portion 152 is an LED.

Optionally, as shown in FIG. 1 and FIG. 4, the blocking device may further include a wire part 700 which is annular-shaped, and the wire part 700 is sleeved outside a channel portion as described below, and the wire part 700 is arranged on one side of the second receiving part 600 described below away from the first receiving part 500. The wire part 700 may further include multiple electrical connectors, and the number of the multiple electrical connectors is equal to the number of the blocking assemblies. The multiple electrical connectors are uniformly distributed in a circumferential direction of the wire part 700, to make the electrical connectors be in one-to-one correspondence with the projecting portions 152, and the projecting portion 152 may be electrically connected to the corresponding electrical connector via a wire to supply power for the projecting portion 152.

Optionally, when the blocking assemblies are in the first state, the light-emitting assembly 800 can be turned on to allow the light beam from the light-emitting assembly 800 to directly irradiate the blocking assemblies 110, so as to realize a front-projecting state of the vehicle lamp as described below.

In the embodiment, as shown in FIG. 1, FIG. 2 and FIG. 4, the blocking device may further include a first receiving part 500, which includes a channel portion and an annulus portion being connected to each other. The channel portion includes a cylindrical channel, an axis of the cylindrical channel coincides with an axis of the blocking body, the annulus portion is arranged between the transmission part 200 and the multiple blocking assemblies, and the rotary shaft 120 runs through the annulus portion. In this way, the transmission part 200 and the rotary gears 130 are separated from the blocking sheets 110, effectively preventing the blocking sheet 110 from interfering with the transmission part 200 and the rotary gears 130 during rotation, and thereby ensuring the transmission stability of the blocking device.

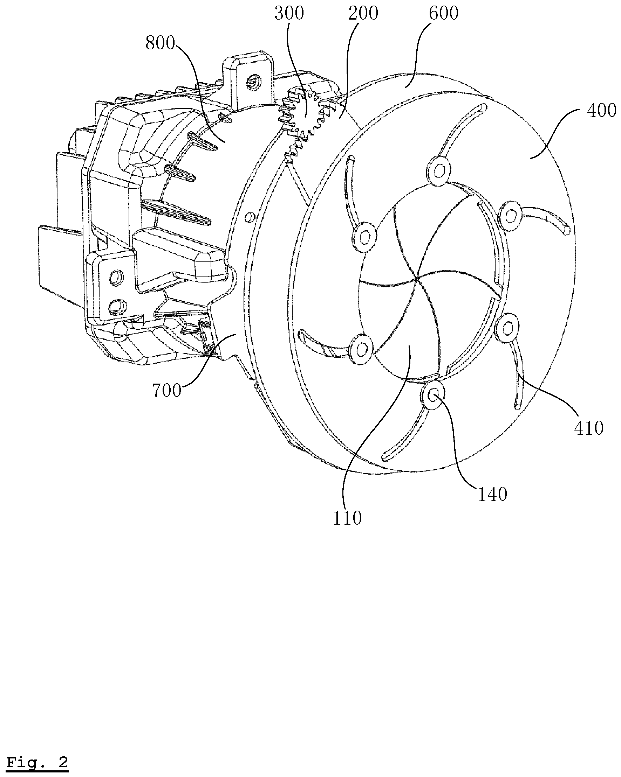

Preferably, as shown in FIG. 1 and FIG. 2, the light-emitting assembly 800 is arranged at one end of the cylindrical channel. Correspondingly, the annulus portion is provided at the other end of the cylindrical channel, so that when the blocking assemblies are in the first state, the blocking body can block the cylindrical channel to realize blocking of the light-emitting assembly 800. In other words, the channel portion can effectively prevent the light emitted by the light-emitting assembly 800 from transmitting through a gap between the light-emitting assembly 800 and the blocking body, thus effectively improving the effect of the front-projecting illumination of the light-blocking sheet.

Further, as shown in FIG. 1, FIG. 2 and FIG. 4, the blocking device further includes a second receiving part 600 being in an annular shape, the second receiving part is sleeved outside the above channel portion. The second receiving part 600 is arranged on one side of the transmission part 200 away from the multiple blocking assemblies; one end of the rotary shaft 120 is connected to the second receiving part 600, and the other end of the rotary shaft 120 is connected to the blocking sheet. In this way, a transmission space is defined between the first receiving part and the second receiving part 600 by enclosing, so that the transmission part 200 and the rotary gears 130 can perform stable transmission in the transmission space, and the transmission part 200 and the rotary gears 130 can be effectively limited by the first receiving part and the second receiving part 600.

A vehicle lamp is also provided according to an embodiment of the present application, the vehicle lamp includes the blocking device described in any one of the above embodiments, and thus the vehicle lamp has all the beneficial technical effects of the blocking device, which will not be described in detail here. Preferably, the vehicle lamp further includes the above light-emitting assembly 800. When the blocking assemblies are in the first state, the vehicle lamp may be switched among a resting state, a side-projecting state and a front-projecting state. Specifically, when the vehicle lamp is in the resting state, both the light-emitting assembly 800 and the projecting parts are set not to emit light, so that the vehicle lamp can be adjusted to the resting state when the vehicle is shutdown. When the vehicle lamp is in the side-projecting state, the projecting parts are set to emit light, and the light-emitting assembly 800 is set not to emit light. When the vehicle lamp is in the front-projecting state, the light-emitting assembly 800 is set to emit light, and the projecting parts are set not to emit light. The above arrangement effectively makes the illumination mode of the vehicle lamp diversified, so that the vehicle lamp can provide different illumination effects according to different use states, thereby increasing the interest and aesthetics during use of the vehicle lamp.

Optionally, the light-emitting assembly 800 may be an LED, an xenon lamp, a halogen lamp, or the like.

Finally, it should be noted that the above embodiments are only used to illustrate the technical solutions of the present application, but not to limit the present application. Although the present application has been described in detail with reference to the above embodiments, it should be understood by those skilled in the art that modifications can be made to the technical solutions recorded in the above embodiments or equivalent replacements can be made to some or all of the technical features thereof, which modifications and equivalent replacements will not make the corresponding technical solutions deviate from the scope of the technical solutions of the embodiments of the present application.

## Claims

1. A blocking device, configured for blocking a light-emitting assembly (800) having a light path direction, the blocking device being provided in front of the light-emitting assembly (800) in the light path direction, wherein the blocking device comprises a transmission part (200) and a plurality of blocking assemblies, the transmission part (200) comprises transmission teeth, and each of the plurality of blocking assemblies comprises meshing teeth, and the transmission teeth are meshed with the meshing teeth to drive the corresponding blocking assembly to switch between a first state and a second state; and wherein
in the first state of the plurality of blocking assemblies, the plurality of blocking assemblies are fitted together to form a blocking body, to make at least part of the light-emitting assembly (800) be blocked by the blocking body as viewed in the light path direction; and
in the second state of the plurality of blocking assemblies , the transmission part (200) is configured to drive the plurality of blocking assemblies to be separated from each other, to make the light-emitting assembly (800) be exposed as viewed in the light path direction.

2. The blocking device according to claim 1, wherein the transmission teeth are embodied as an inner toothed ring (210); each of the plurality of blocking assemblies comprises a rotary shaft (120), and the meshing teeth of the blocking assembly are embodied as a rotary gear (130), the rotary gear (130) and the rotary shaft (120) are coaxially arranged, the rotary gear (130) is meshed with the inner toothed ring (210) to drive the blocking assembly to rotate with the rotary shaft (120), to make the blocking assembly be switched between the first state and the second state.

3. The blocking device according to claim 2, wherein each of the plurality of blocking assemblies further comprises a blocking sheet (110), and the rotary shaft (120) is provided on one side of the blocking sheet (110) proximate to the inner toothed ring (210); and
the blocking body is in a circular shape as viewed in the light path direction, and the blocking sheets (110) of the plurality of blocking assemblies are uniformly distributed in a circumferential direction of the circular shape.

4. The blocking device according to claim 3, wherein the transmission part (200) further comprises driving teeth (220), the blocking device further comprises a driving assembly (300), and the driving assembly (300) is meshed with the driving teeth (220); and
the transmission part (200) is an annular washer, the inner toothed ring (210) is provided on an inner ring of the annular washer, and the driving teeth (220) are provided on at least part of an outer ring of the annular washer.

5. The blocking device according to claim 3, wherein each of the plurality of blocking assemblies further comprises a guide post (140), and the guide post (140) is provided on the other side of the blocking sheet (110); and
the blocking device further comprises a guide part (400) having a guide groove (410), the guide post (140) is arranged in the guide groove (410), and the guide post (140) is configured to slide along the guide groove (410) when the blocking assembly is being switched between the first state and the second state.

6. The blocking device according to claim 3, further comprising a first receiving part (500) having a channel portion and an annulus portion being connected to each other; the channel portion comprises a cylindrical channel, and the light-emitting assembly (800) is arranged at one end of the cylindrical channel, and the cylindrical channel has an axis coinciding with an axis of the blocking body; the annulus portion is arranged between the transmission part (200) and the plurality of blocking assemblies, and the rotary shaft (120) runs through the annulus portion.

7. The blocking device according to claim 6, further comprising a second receiving part (600) being in an annular shape, the second receiving part (600) is sleeved outside the channel portion, the second receiving part (600) is arranged on one side of the transmission part (200) away from the plurality of blocking assemblies; one end of the rotary shaft (120) is connected to the second receiving part (600), and the other end of the rotary shaft (120) is connected to the blocking sheet (110).

8. The blocking device according to any one of claims 3 to 6, further comprising projecting parts, each of the blocking assemblies comprises a corresponding one of the projecting parts, and the projecting part is provided on one edge of the blocking sheet (110) away from a center of the circular shape;
the blocking sheet (110) is a light guide sheet, and the light guide sheet is configured to emit light when being irradiated by light emitted from the projecting part or the light-emitting assembly (800); or,
the blocking sheet (110) is a first light-transmitting sheet, and one side of the first light-transmitting sheet is provided with a colored coating film, wherein a thickness of a portion of the colored coating film located at a predetermined position of the first light-transmitting sheet is different from a thickness of the remaining portion the colored coating film located at other positions of the first light-transmitting sheet, to make the predetermined position of the first light-transmitting sheet have a light transmittance different from that of the other positions, to enable the first light-transmitting sheet to present a predetermined pattern; or,
the blocking sheet (110) is a second light-transmitting sheet, and a portion of the second light-transmitting sheet is provided with an opaque coating layer.

9. A vehicle lamp comprising the blocking device according to claim 8.

10. The vehicle lamp according to claim 9, further comprising the light-emitting assembly (800), and the vehicle lamp is allowed to be switched among a resting state, a side-projecting state and a front-projecting state when the plurality of blocking assemblies are in the first state; and wherein
both the light-emitting assembly (800) and the projecting parts are configured not to emit light in the resting state of the vehicle lamp;
the projecting parts are configured to emit light while the light-emitting assembly (800) is configured not to emit light in the side-projecting state of the vehicle lamp; and
the light-emitting assembly (800) is configured to emit light while the projecting parts are configured not to emit light in the front-projecting state of the vehicle lamp.
